# EUROPEAN PATENT APPLICATION

(11) **EP 4 847 375 A1**
(43) Date of publication of application: **02.12.2026**
(21) Application number: 26181175.6
(22) Date of filing: 26.05.2026
(51) Int. Cl.: B64C 3/58, B64C 5/12, B64C 9/02, B64C 9/04, B64C 9/10, B64C 9/14, B64C 9/32, B64C 9/34, B64C 1/14

(54) **AIRCRAFT ASSEMBLY WITH MOVEABLE DEVICE**

(30) Priority: 30.05.2025 GB 202508535
(71) Applicant: Airbus Operations Ltd, Filton, Bristol BS34 7PA (GB)
(72) Inventor: FALVEY, Thomas, Bristol, BS34 7PA (GB); MUTTEN, Gordon, Bristol, BS34 7PA (GB)
(74) Representative: Pilcher, Adam

(57) **Abstract**

An aircraft assembly comprising: a cover of an aerofoil structure with an outer aerodynamic surface and an aperture with a stop adjacent an edge of the aperture. The aircraft assembly further comprises a moveable device. The moveable device may comprise a pop-up spoiler for extending through the aperture in the cover to spoil an airflow over the aerofoil structure; and a panel attached to the pop-up spoiler. The aircraft assembly further comprises a plurality of compression springs for biasing the panel towards the pop-up spoiler. Each compression spring may comprise a plurality of disc springs stacked along a spring axis. Each compression spring has a spring axis. Each compression spring may be associated with a guide for constraining displacement of the compression spring other than along the spring axis. Each compression spring is configured so that the compression spring shortens as a compressive load is applied to the compression spring in the direction of the spring axis. The aircraft assembly is configured so that when the pop-up spoiler is moved towards a retracted position inside the aerofoil structure the panel bears against the stop so that a face of the panel forms a substantially flush surface with the outer aerodynamic surface of the cover surrounding the aperture, and the panel is displaced from the pop-up spoiler by compressive elastic deformation of at least some of the compression springs.

## Description

### FIELD OF THE INVENTION

The present invention relates to an aircraft assembly comprising a moveable device, in particular a pop-up spoiler.

### BACKGROUND OF THE INVENTION

Aircraft generally have moveable devices, such as flight control surfaces or landing gear bay doors, that are moveable between a retracted and an extended position relative to the remainder of the aircraft structure. It is often desirable that these moveable devices form a flush surface with the outer aerodynamic surface of the aircraft when the moveable device is in a retracted position, so as to improve the aerodynamic efficiency of the aircraft.

It can be challenging for aircraft designers to create these flush surfaces, especially where the moveable device is relatively large and/or where the adjacent aircraft structure is susceptible to relatively large deflections, e.g. wing bending. Whilst compliant materials, such as flexible seals, can be used to accommodate manufacturing dimensional tolerances and flexing of the aircraft structure to avoid excessive gaps between the outer aerodynamic surface of the aircraft structure and the moveable device, there is a drive to improve the flushness of these moveable devices so as to improve aerodynamic efficiency of the aircraft, especially in these areas where the moveable device is relatively large and where the adjacent aircraft structure is susceptible to relatively large deflections.

### SUMMARY OF THE INVENTION

A first aspect of the invention provides an aircraft assembly comprising: a cover of an aerofoil structure with an outer aerodynamic surface and an aperture with a stop adjacent an edge of the aperture. The aircraft assembly further comprises a pop-up spoiler assembly. The pop-up spoiler assembly comprises a pop-up spoiler for extending through the aperture in the cover to spoil an airflow over the aerofoil structure; a panel attached to the pop-up spoiler; and a plurality of compression springs for biasing the panel towards the pop-up spoiler. Each compression spring has a spring axis. Each compression spring is configured so that the compression spring shortens as a compressive load is applied to the compression spring in the direction of the spring axis. The aircraft assembly is configured so that when the pop-up spoiler is moved towards a retracted position inside the aerofoil structure the panel bears against the stop so that a face of the panel forms a substantially flush surface with the outer aerodynamic surface of the cover surrounding the aperture, and the panel is displaced from the pop-up spoiler by compressive elastic deformation of at least some of the compression springs.

Optionally, each compression spring is associated with a guide for constraining displacement of the compression spring other than along the spring axis.

Optionally, the guide is fixed to the panel.

Optionally, the guide extends through the compression spring.

Optionally, the guide extends through a hole in the pop-up spoiler, and is slidably arranged to move through the hole.

Optionally, the panel is disposed on a first side of the hole, and the compression spring is disposed on a second side of the hole opposite the first side.

Optionally, the compression spring has a first end and a second end, and the first end is constrained in a direction along the spring axis by the spoiler and the second end is constrained in a direction along the spring axis by the guide.

Optionally, the guide comprises an insert connected to the panel by a fastener.

Optionally, the guide has a flange spaced apart from the panel, and the corresponding compression spring extends between the pop-up spoiler and the flange, and the guide moves with the panel and extends through a hole in the pop-up spoiler.

Optionally, at least one of the compression springs comprises a plurality of disc springs stacked along the spring axis.

Optionally, at least one of the compression springs comprises a coil spring. Optionally the coil spring is a die spring.

Optionally, the compression springs are preloaded such that the compression springs bias the panel towards the pop-up spoiler when the pop-up spoiler is in an extended position.

Optionally, the aircraft assembly further comprises an actuation mechanism for moving the pop-up spoiler with respect to the cover. Preferably, the actuation mechanism is for translating the pop-up spoiler with respect to the cover. Preferably, the actuation mechanism is arranged to move the pop-up spoiler in a direction substantially normal to the outer aerodynamic surface.

Optionally, the aerofoil structure is an aircraft wing and the cover is a cover of the aircraft wing, optionally an upper wing cover.

Optionally, the pop-up spoiler is moved by an actuation mechanism within the aircraft wing. Optionally, the actuation mechanism occupies substantially a full depth of the wing between upper and lower covers thereof.

A second aspect of the invention provides an aircraft assembly comprising: a cover of an aircraft structure with an outer aerodynamic surface and an aperture with a stop adjacent an edge of the aperture. The aircraft assembly further comprises a moveable device for extending through the aperture in the cover. The moveable device carries a panel attached to the moveable device. The aircraft assembly further comprises a plurality of compression springs for biasing the panel towards the moveable device. Each compression spring comprises a plurality of disc springs stacked along a spring axis. Each compression spring is configured so that the compression spring shortens as a compressive load is applied to the compression spring in the direction of the spring axis. The aircraft assembly is configured so that when the moveable device is moved towards a retracted position, the panel bears against the stop so that a face of the panel forms a substantially flush surface with the outer aerodynamic surface of the cover surrounding the aperture, and the panel is displaced from the moveable device by compressive elastic deformation of at least some of the compression springs.

Optionally, each compression spring is associated with a guide for constraining displacement of the compression spring other than along the spring axis.

Optionally, the guide is fixed to the panel.

Optionally, the guide extends through the compression spring.

Optionally, the guide extends through a hole in the moveable device, and is slidably arranged to move through the hole.

Optionally, the panel is disposed on a first side of the hole, and the compression spring is disposed on a second side of the hole opposite the first side.

Optionally, the compression spring has a first end and a second end, and the first end is constrained in a direction along the spring axis by the moveable device and the second end is constrained in a direction along the spring axis by the guide.

Optionally, the guide comprises an insert connected to the panel by a fastener.

Optionally, the guide has a flange spaced apart from the panel, and the corresponding compression spring extends between the moveable device and the flange, and the guide moves with the panel and extends through a hole in the moveable device.

Optionally, each disc spring has a radial inner edge and a radial outer edge. Optionally, the radial inner edge of one of the disc springs at a first end of the stack is in contact with the body of the moveable device. Optionally, the radial inner edge of another of the disc springs at a second end of the stack is in contact with the flange of the insert.

Optionally, the compression springs are preloaded such that the compression springs bias the panel towards the moveable device when the moveable device is in an extended position.

Optionally, the aircraft assembly further comprises an actuation mechanism for moving the moveable device with respect to the cover. Preferably, the actuation mechanism is for translating the moveable device with respect to the cover. Preferably, the actuation mechanism is arranged to move the moveable device in a direction substantially normal to the outer aerodynamic surface.

Optionally, the cover is a cover of the aircraft fuselage or an aircraft wing cover, and the moveable device is an aircraft spoiler, a landing gear bay door or a vent door.

Optionally, the panel is elongate having a longitudinal direction. Optionally, the plurality of compression springs are spaced apart in the longitudinal direction.

Optionally, the stop is a rebate around at least a portion of the edge of the aperture, and/or wherein the aperture is an elongate slot.

A further aspect of the invention provides a cover of an aerofoil structure with an outer aerodynamic surface and an aperture with a stop adjacent an edge of the aperture; and a pop-up spoiler assembly comprising: a pop-up spoiler for extending through the aperture in the cover to spoil an airflow over the aerofoil structure; a panel attached to the pop-up spoiler; and a plurality of compression springs for biasing the panel towards the pop-up spoiler, wherein each compression spring includes an elastomeric cylinder, each compression spring having a spring axis and configured so that the compression spring shortens as a compressive load is applied to the compression spring in the direction of the spring axis, wherein the aircraft assembly is configured so that when the pop-up spoiler is moved towards a retracted position inside the aerofoil structure the panel bears against the stop so that a face of the panel forms a substantially flush surface with the outer aerodynamic surface of the cover surrounding the aperture, and the panel is displaced from the pop-up spoiler by compressive elastic deformation of at least some of the compression springs.

### BRIEF DESCRIPTION OF THE DRAWINGS

Embodiments of the invention will now be described with reference to the accompanying drawings, in which:
Figure 1 shows a schematic plan view of an aircraft having a moveable device;
Figure 2 shows a schematic perspective view of an aircraft wing structure with the moveable device in the deployed position;
Figure 3 shows a schematic spanwise sectional view of the aircraft wing structure with the moveable device fully retracted;
Figure 4 shows a schematic spanwise sectional view of the aircraft wing structure with the moveable device fully deployed;
Figure 5 shows schematic cross-sectional view of a portion of a moveable device assembly in a deployed position;
Figure 6 shows the moveable device assembly of Figure 5 in a retracted position;
Figure 7 shows schematic cross-sectional view of a portion of a further moveable device assembly in a deployed position;
Figure 8 shows the moveable device assembly of Figure 7 in a retracted position;
Figure 9 shows a schematic chordwise sectional view of the aircraft wing structure with the moveable device fully retracted;
Figure 10 shows a schematic chordwise sectional view of the aircraft wing structure with the moveable device being deployed;
Figure 11 shows a schematic chordwise sectional view of the aircraft wing structure with the moveable device being retracted;
Figure 12 shows a schematic chordwise sectional view of the aircraft wing structure with the moveable device being retracted and the panel making contact with the stop;
Figure 13 shows a schematic chordwise sectional view of the aircraft wing structure with the moveable device fully retracted;
Figure 14 shows schematic cross-sectional view of a portion of a moveable device assembly in a deployed position; and
Figure 15 shows the moveable device assembly of Figure 14 in a retracted position;

### DETAILED DESCRIPTION OF EMBODIMENT(S)

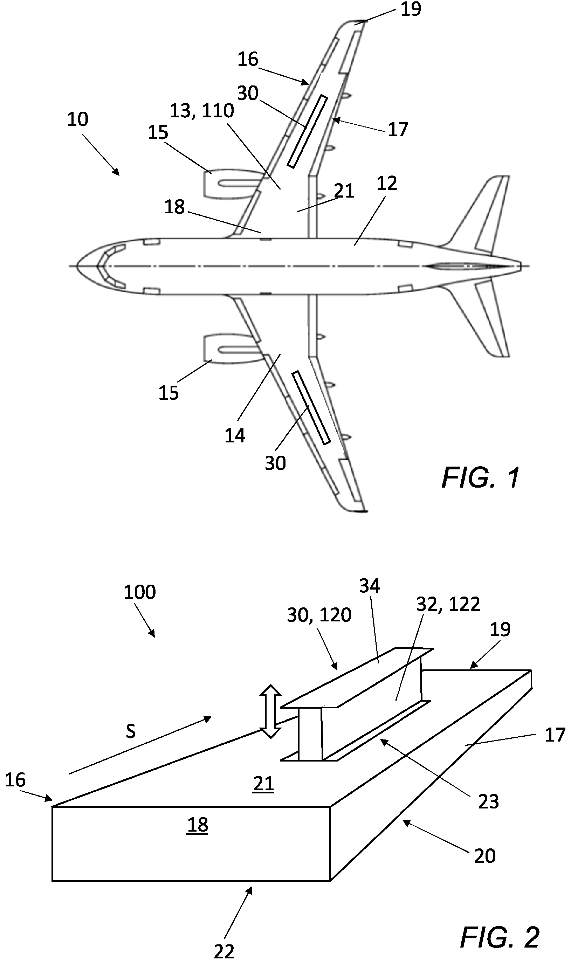

Figure 1 shows an aircraft 10. The aircraft 10 has a fuselage 12, and starboard and port fixed wings 13, 14. An engine 15 is mounted to each wing 13, 14. The aircraft 10 is a typical jet passenger transport aircraft but the invention is applicable to a wide variety of fixed wing aircraft types, including commercial, military, passenger, cargo, jet, propeller, general aviation, etc. with any number of engines attached to the wings or fuselage.

Each wing has a cantilevered wing structure with a length extending in a spanwise direction from a root 18 to a tip 19, with the root 18 being joined to the aircraft fuselage 12. The wings 13, 14 are similar in construction and so only the starboard wing 13 will be described in detail. The wing 13 has a leading edge 16 and a trailing edge 17. The leading edge 16 is at the forward end of the wing and the trailing edge 17 is at the rearward end of the wing.

The wing 13 is an example of an aerofoil structure 110a, which is an example of an aircraft structure 110. The wing 13 may comprise a wing box 20. The wing box 20 forms a structural assembly including forward and rear spars (part of the rear spar shown in Figure 2), ribs extending between the forward and rear spars. The wing 13 may alternatively have a multi-spar construction. Regardless of the wing structure, the wing has upper and lower wing covers, 21, 22 and leading and trailing edge cover panels (collectively the "wing covers"), which form part of the outer aerodynamic surface of the wing. The wing 13 has an upper aerodynamic surface between the leading and trailing edges 16, 17 and a lower aerodynamic surface between the leading and trailing edges of the wing.

The wing 13 has a spanwise axis S which extends in a direction from the wing root 18 to the wing tip 19, and a chordwise axis which extends in the direction from the leading edge 16 to the trailing edge 17. The wing 13 may have an aerofoil cross section. The wing 13 has a thickness direction perpendicular to the chordwise and spanwise directions.

The wing 13 has a pop-up spoiler assembly 30 as best shown in Figure 2. Any description hereinafter referring to a pop-up spoiler assembly 30 may apply more generally to a moveable device assembly 120. Similarly, it will be appreciated that the following teachings regarding a wing 13 and pop-up spoiler assembly 30 may more generally be applied to an aircraft structure 110 and a moveable device assembly 120. The wing 13 (more generally the aircraft structure 110) and the pop-up spoiler assembly 30 (more generally the moveable device assembly 120) may together be referred to as an aircraft assembly 100. The pop-up spoiler assembly 30 comprises an actuation mechanism 31 and a pop-up spoiler 32 coupled to the actuation mechanism. The pop-up spoiler 32 is an example of a moveable device 122.

The pop-up spoiler 32 is moved by the actuation mechanism 31 to translate along substantially a single linear axis without rotation. The pop-up spoiler 32 may be arranged to move substantially vertically in a direction substantially normal to the outer aerodynamic surface of the upper wing cover, e.g. wing cover 21. The pop-up spoiler 32 is moveable by the actuation mechanism 31 to deploy through an aperture 23 in the upper wing cover 21. Alternatively, the pop-up spoiler 32 may be moveable by the actuation mechanism 31 to deploy through an aperture in another of the wing covers, e.g. lower wing cover, or a leading edge cover panel or a trailing edge cover panel on the upper or lower surface of the wing. Generally, the pop-up spoiler 32 may be positioned between the leading edge and the trailing edge of an aircraft wing. It may be preferable to position the pop-up spoiler 32 fore of a forward spar (i.e. fore of the wing box 20) or aft of a rear spar (i.e. aft of the wing box 20). This may be preferable where a fuel storage volume is provided within the wing box 20, so that the pop-up spoiler 32 does not take up space that could otherwise be used for storing fuel. Alternatively, the pop-up spoiler 32 may be positioned aft and adjacent, optionally immediately adjacent, a forward spar (i.e. within the wing box 20) or fore and adjacent, optionally immediately adjacent, a rear spar (i.e. within the wing box 20). Positioning the pop-up spoiler 32 within the wing box 20 when retracted may provide a greater volume, in particularly a greater height, in which the pop-up spoiler 32 may be housed compared to the space and/or height available fore or aft of the wing box 20 (i.e. in the leading edge or trailing edge of the wing). Further, the forward or rear spar may provide a convenient structure for mounting the spoiler assembly 30, in particular the actuation mechanism 31, to the wing.

The pop-up spoiler 32 is configured to move between a retracted position in which the spoiler is fully within the aerofoil profile of the wing 13, and an extended position in which the spoiler extends above the surface of the upper wing cover 21. The pop-up spoiler 23 may have a plurality of extended positions.

The pop-up spoiler 32 may be arranged as a substantially flat wall or thick plate facing the oncoming airflow over the upper wing cover 21 when in the extended position to disrupt or otherwise spoil an airflow over the wing 13. The pop-up spoiler 32 may have a length extending substantially in a spanwise direction of the wing, and a height extending substantially in a thickness direction of the wing. The length of the pop-up spoiler 32 may be several times its height. With the pop-up spoiler 32 facing the oncoming airflow, the actuation mechanism 31 may be behind the thick plate so as to be protected by the spoiler from high speed airflow. The aperture 23 in the upper wing cover 21 may be an elongate slot, preferably a substantially rectangular slot.

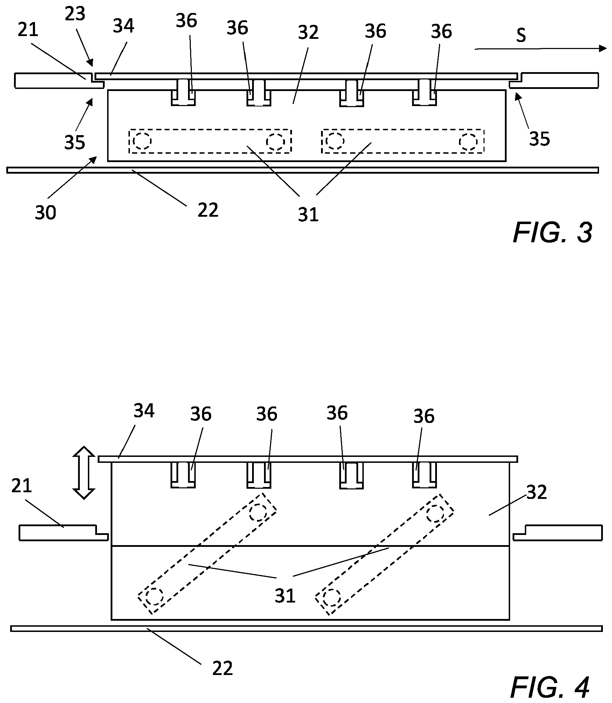

The pop-up spoiler 32 carries a panel 34. The panel 34 has an upper surface which forms a substantially flush surface with an outer aerodynamic surface of the upper wing cover, e.g. the wing cover 21, when the pop-up spoiler 32 is in the retracted position. The panel 34 may be a substantially flat plate mounted to the top of the pop-up spoiler 32 to form a 'top hat'. The panel 34 generally moves with the deployment and retraction of the pop-up spoiler 32. The panel 34 may have a slightly curved surface to match the aerofoil profile of the wing 13 (i.e. the shape of the outer aerodynamic surface of the wing cover(s)) when the panel 34 occupies the aperture 23. Figure 3 shows the spoiler 32 in the retracted position. It will be appreciated that, more generally, the moveable device assembly 120 may comprise a moveable device 122 carrying a panel 34.

As shown in Figure 3, the aperture 23 has a stop 35. The stop 35 may be formed as a rebate around at least a portion of the edge of the aperture 23. The rebate may be formed continuously around the edge of the aperture, or may be formed in sections with one or more breaks in between the sections. Alternatively, the stop 35 may comprise a housing coupled to the aircraft structure 110 and configured to receive or otherwise support the pop-up spoiler 32 when the pop-up spoiler 32 is in the retracted position. The depth of the rebate or housing may match the thickness of the panel 34 so that the upper surface of the panel is flush with the outer aerodynamic surface of the upper wing cover 21 when the pop-up spoiler 32 is in the retracted position.

The panel 34 is coupled to the pop-up spoiler 32, by a plurality of compression springs 36. A compression spring 36 is here defined as a spring extending along a spring axis, that shortens as a compressive load is applied to the spring in the direction of the spring axis. As such, a compression spring will exert a restoring force when compressed acting to return the compression spring to its natural length. In some cases, the compression spring 36 may be configured to not extend under elastic deformation when a tensile load is applied to the spring in the direction of the spring axis. That is to say that in some cases, the compression spring 36 may be elastically deformable under compressive loads only. The panel 34 may be elongate in a longitudinal direction, for example in the spanwise direction S of the aircraft wing 13. The compression springs 36 may be spaced apart in the longitudinal direction, as shown most clearly in Figure 3. Although shown as comprising 4 compression springs 36, it will be appreciated that the pop-up spoiler assembly 30 may comprise any number of compression springs 36, such as for example 2, 5, 6 or 8. The compression springs 36 may be evenly spaced along the longitudinal length of the panel 34 or may be spaced at uneven intervals along the longitudinal length of the panel 34.

The compression springs 36 enable the panel 34 to be displaced relative to the pop-up spoiler 32. When the pop-up spoiler 32 is fully retracted, as shown in Figure 3, the panel 34 bears against the stop 35 and at least some of the compression springs 36 are elastically deformed such that the panel 34 is displaced away from the moveable device. Where the stop 35 is formed as the rebate around at least a portion of the edge of the aperture 23 the rebate contacts (directly or indirectly) the peripheral edge of the reverse side of the panel 34 (i.e. an inner side of the panel 34 not exposed to airflow).

By activating the actuation mechanism 31 to move the spoiler from the retracted position to the fully extended position, shown in Figure 4, the pop-up spoiler 32 is moved through the aperture 23. The panel 34 atop the moveable device, such as the spoiler 32, may lie substantially parallel with the outer aerodynamic surface of the upper wing cover, e.g. wing cover 21, so that in the extended position of the pop-up spoiler 32 the panel 34 is substantially aligned with the oncoming airflow over the wing 13.

Once the panel 34 is moved clear of the stop 35, during the beginning of the extension of the pop-up spoiler 32 from the fully retracted position, the force imparted by the stop 35 on the panel 34 is removed. **In** the example shown, the compression springs 36 are biased to displace the panel 34 towards the pop-up spoiler 32. This may be achieved by preloading the compression springs 36 such that the compression springs 36 bias the panel 34 towards the pop-up spoiler 32 when the pop-up spoiler 32 is in the extended position. Providing a slight preload may act against aerodynamic low pressure forces tending to displace the panel 34 away from the stop 35 when the pop-up spoiler 32 is retracted and/or to displace or deflect the panel 34 away from the top of the pop-up spoiler 32 when the spoiler 32 is extended. Such displacement may add undesirable load to the pop-up spoiler 32. The panel 34 is displaced away from the pop-up spoiler 32 when the panel bears against the stop 35.

In Figure 4, the panel 34 is shown closely coupled to the moveable device, illustrating an example in which the panel 34 contacts the pop-up spoiler 32 when no external loads are applied to the pop-up spoiler assembly 30. Minimising the distance or clearance between the panel 34 and the pop-up spoiler 32 when in an un-loaded or nominal state may reduce the overall size of the pop-up spoiler assembly 30 and/or may allow the compression springs 36 to be preloaded as described previously.

The plurality of compression springs 36 may each deform substantially independently so that the movement of the pop-up spoiler 32 to the retracted position does not affect the positioning of the panel 34 against the stop 35. This may accommodate a greater tolerance for mounting the pop-up spoiler 32 relative to the cover 21 (and also in the actuation mechanism 31 for effecting the movement of the pop-up spoiler) whilst still providing a close tolerance for siting the panel 34 against the stop 35. In this way, the panel 34 can be arranged flush with the outer aerodynamic surface of the cover 21 surrounding the aperture 23 without requiring high positional accuracy of mounting the pop-up spoiler 32 with respect to the cover 21. This may also help to retain the flush positioning of the panel 34 even as the cover 21 flexes and deforms in normal use.

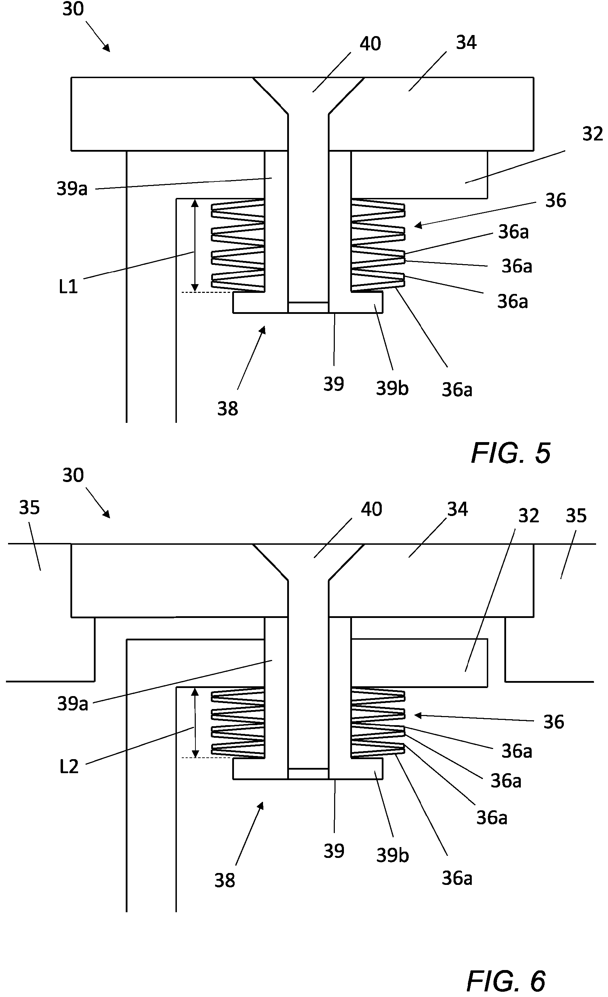

Figure 5 shows a cross-sectional schematic view of a portion of the pop-up spoiler assembly 30 in the deployed position, showing a connection between the pop-up spoiler 32 and the panel 34. Since each compression spring 36 is configured to be loaded under compression rather than tension, there is a need to arrange the pop-up spoiler assembly 30 such that an increase in the gap between the panel 34 and the pop-up spoiler 32 (i.e. the panel 34 being displaced away from the spoiler 32, for example when the spoiler 32 is moved towards the retracted position) causes a decrease in the length of the compression spring 36. Figures 5 to 8 show examples of such an arrangement, with the panel 34 positioned on a first, upper side of the pop-up spoiler 32, and the compression spring 36 positioned on a second, lower side of the pop-up spoiler 32.

In the examples shown in Figures 5 to 8, each compression spring 36 is associated with a guide 38, which constrains movement and/or displacement of the compression spring 36 in all directions other than along the spring axis. The guide 38 may extend along the spring axis. The guide 38 is fixed to the panel 34 such that the guide 38 moves with the panel 34. In the example shown, the guide 38 comprises an insert 39 connected to the panel 34 by a fastener 40. Any reference made hereinafter to the insert 39 may be applied more generally to the guide 38 as a whole. The head or similar of the fastener 40 may be substantially flush with the outer surface of the panel 34 so as not to disrupt airflow over the panel 34, in particular when the pop-up spoiler 32 is retracted.

The insert 39 comprises a body or body portion 39a about which the compression spring 36 is arranged. That is to say that the guide 38 may extend through the compression spring 36. The insert 39 further comprises a flange or flange portion 39b extending from the body portion 39a at a first end thereof. The fastener 40 connects the insert 39 to the panel 34 such that a second end of the body portion 39a is clamped against the underside of the panel 34, and the flange 39b at the first end of the insert 39 is spaced apart from the panel 34 along the spring axis.

In the example shown, the insert extends through a hole in the pop-up spoiler 32. It will therefore be appreciated that the insert 39 moves with the panel 34 and is therefore moveable by sliding relative to the pop-up spoiler 32. As such, the guide 38 extends through a hole in the pop-up spoiler 32, and is slidably arranged to move through the hole. In this way, the panel is disposed on a first side of the hole, and the compression spring is disposed on a second side of the hole opposite the first side.

The corresponding compression spring 36 extends between the pop-up spoiler 32 and the flange 39b. That is to say that the compression spring 36 is clamped between the underside of the pop-up spoiler 32 and the flange 39b of the insert 39. The compression spring 36 has a first end and a second end. The first end of the compression spring 36 is constrained in a direction along the spring axis by the spoiler, in particular an underside of a portion of the spoiler. The second end is constrained in a direction along the spring axis by the guide 38, in particular the flange 39b.This arrangement may allow the compression spring 36 to be preloaded during assembly of the pop-up spoiler assembly 30. By way of example, the compression spring 36 may be assembled onto the body 39a of the insert 39 prior to its assembly with the pop-up spoiler assembly 30. The panel 34, pop-up spoiler 32 and insert 39 may then be aligned and the fastener 40 used to connect the insert 39 to the panel 34. As described previously, the fastener 40 may be tightened until the second end of the body 39a of the insert 39 contacts the underside of the panel 34.

The natural length of the compression spring 36 may be chosen such that the act of clamping the insert 39 against the panel 34 preloads the compression spring 36 in compression. That is to say that the natural length of the compression spring 36 may be less than the length L1 measured between the underside of the pop-up spoiler 32 and the upper side of the flange 39b as labelled in Figure 5. It will be appreciated that the terms "upper" and "lower" are relative and here defined according to the orientation of the assembly shown in Figure 5. **In** some cases, the preload of the compression spring 36 in compression may be the only method by which the compression spring 36 is connected to the pop-up spoiler 32 and the insert 39. That is to say that, in some cases, ends of the compression spring 36 are not fixed to the pop-up spoiler 32 or the insert 39. Once loaded in compression, the compression spring 36 will exert a force upon the flange 39b and the pop-up spoiler 32. This force acts to extend the compression spring 36 thus biasing the panel 34 towards the pop-up spoiler 32. Subsequent movement of the panel 34 away from the pop-up spoiler 32 as described previously with reference to retraction of the pop-up spoiler 32 and shown in Figure 6 will cause further compressive elastic deformation of the compression spring 36, as shown by the compressed length L2 of the spring in Figure 6. This may in turn increase the magnitude of the force acting to bias the panel 34 towards the pop-up spoiler 32.

Each of the compression springs 36 may comprise a plurality of disc springs 36a stacked along the spring axis, as shown most clearly in Figures 5 and 6. For clarity only some of the disc springs are labelled. Disc springs may provide a convenient way of providing compression springs having a relatively high spring stiffness and taking up a relatively low volume and/or having a relatively short natural length. Providing compression springs 36 having a high stiffness may increase the force each compression spring exerts to bias the panel 34 towards the pop-up spoiler 32. This may reduce the likelihood of the panel being displaced away from the pop-up spoiler 32 during use, both when the spoiler is retracted and extended. Although shown in Figure 5 as comprising 8 disc springs 36a, it will be appreciated that each compression spring 36 may comprise any number or disc springs 36a stacked along the spring axis, for example 10, 12, or 16 disc springs.

Each disc spring 36a comprises a generally cone shaped annular body centred about a longitudinal axis. This cone shape provides increased resistance to bending of the annular body, which in turn dictates the spring constant of the disc spring. The annular surfaces of each disc spring may be flat (as shown in Figures 5 and 6) or curved when viewed in a plane parallel to the longitudinal axis of the disc spring 36a. The annular body of each disc spring 36a defines a radial inner edge and a radially outer edge spaced apart in the direction of the longitudinal axis. It may be preferable to align the disc spring 36a closest to the pop-up spoiler 32 such that the radially inner edge is in contact with the body. That is to say that the uppermost disc spring 36a contacting the underside of the pop-up spoiler 32 may be orientated such that the disc spring 36a has a conic taper towards the pop-up spoiler 32 as shown in Figure 5. Similarly, it may be preferable to align the disc spring 36a closest to the flange 39b such that the radially inner edge is in contact with the flange 39b. Arranging the outermost disc springs 36a of the stack, i.e. the uppermost and lowermost disc springs 36a of the stack, in this way may provide a more stable interface between the compression spring 36 and the pop-up spoiler 32 and/or the insert 39. In the example shown, alternate disc springs 36a in the stack are orientated oppositely such that the direction of the conic taper of the plurality of disc springs 36a alternates along the length of the compression spring 36. **In** this arrangement, the disc springs 36a may be said to be arranged in series. The radially inner edges of adjacent disc springs may contact one another. The radially outer edges of adjacent disc springs may contact one another. In other variants the disc springs may be arranged in the stack in a parallel or combination arrangement. In a parallel arrangement the disc springs of the stack all have the same conic taper orientation. In a combination arrangement the disc springs of the stack alternately have multiple adjacent disc springs with the same first conic taper orientation and multiple adjacent disc springs with the same second conic taper orientation.

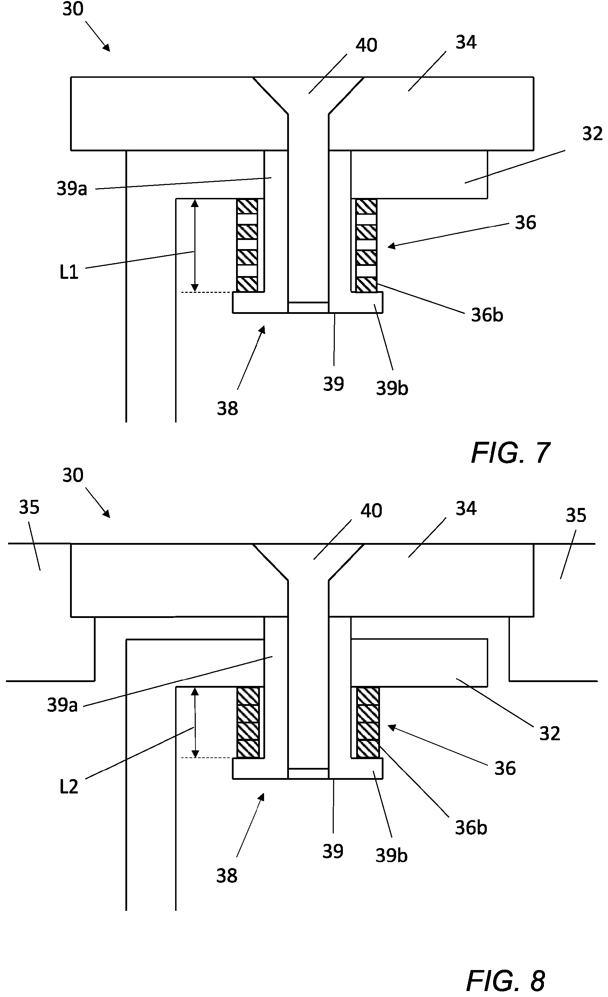

Figures 7 and 8 are similar to Figures 5 and 6, and show a further example of a connection between the pop-up spoiler 32 and the panel 34. In the example shown in Figures 7 and 8, the compression spring 36 comprises a coil spring 36b, in particular a die spring having a rectangular cross-sectional area. Die springs may be stiffer and hence provide a greater resistance to deformation than a coil spring having a circular cross-sectional area made of the same material and having the same overall length and/or weight.

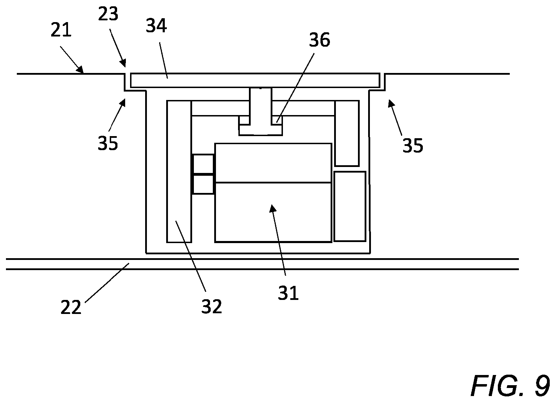

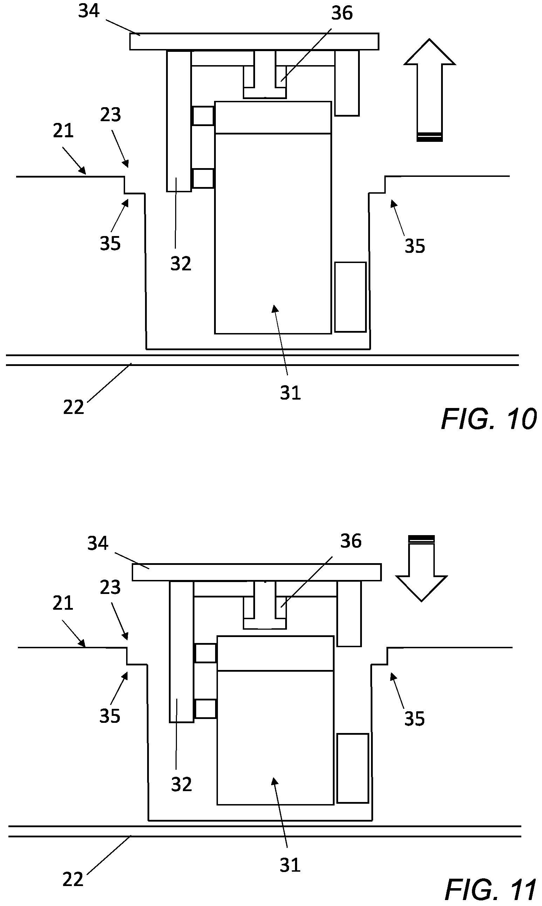

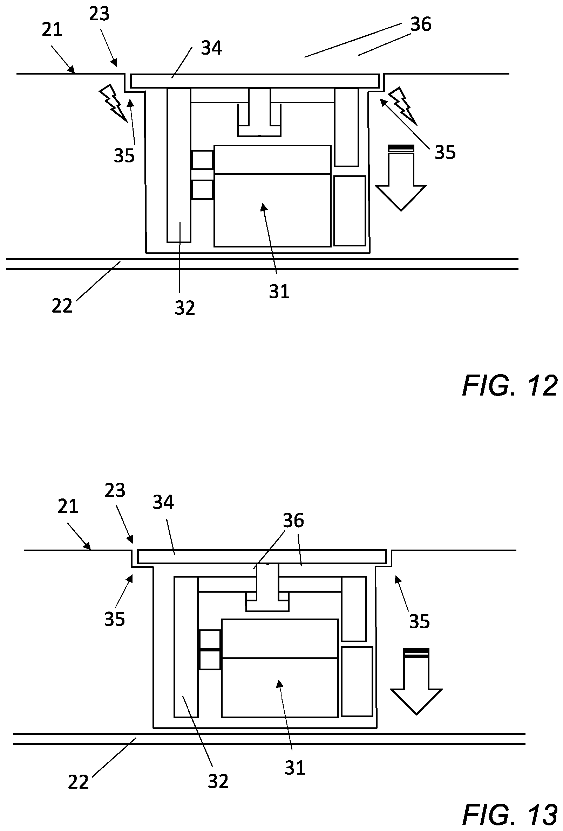

Figures 9 to 13 illustrate a sequence of movement of the pop-up spoiler 32, from a fully retracted position (Figure 9) through an extension (Figure 10), a retraction (Figure 11), further retraction causing engagement of the panel with the stop 35 (Figure 12) and finishing with a return to the fully extended position (Figure 13). Figures 9 to 13 each show chordwise schematic sectional views through the wing 13, and in particular through one of the plurality of compression springs 36.

The chordwise view of Figure 9 corresponds to position of pop-up spoiler 32 in the spanwise view of Figure 3. As such, in Figure 9, the pop-up spoiler 32 is fully retracted and the panel 34 bears against the stop 35. The actuation mechanism 31 applies a force to the spoiler 32 acting to move the spoiler 32 into the wing 13 and away from the outer aerodynamic surface of the upper wing cover 21. Since the panel 34 bears against the stop 35 to react this force, movement of the pop-up spoiler 32 elastically deforms the compression spring 36 as described previously with reference to Figures 6 and 8. In the fully retracted position, the pop-up spoiler 32 is fully within the aerofoil profile of the wing 13 and not exposed to the oncoming airflow over the wing 13 leaving only the panel 34 outer surface exposed to the airflow.

The chordwise view of Figure 10 corresponds to the position of the pop-up spoiler 32 in the spanwise view of Figure 4. As such, in Figure 10, the pop-up spoiler 32 is fully extended, the spoiler 32 having been moved through the aperture 23 by the actuation mechanism 31. The pop-up spoiler 32 is arranged as a substantially flat wall or thick plate facing the oncoming airflow over the upper wing cover 21 when in the extended position. Once the panel 34 is moved clear of the stop 35, during the beginning of the extension of the moveable device from the fully retracted position, the force imparted by the stop 35 on the panel 34 is removed and the compression spring 36 is biased to displace the panel 34 towards the moveable device. Comparing Figures 9 and 10, it can be seen that the compression spring 36 is compressed in Figure 9 and extended in Figure 10 (relative to its compressed length in Figure 9). It will however be appreciated that when the pop-up spoiler 32 is fully extended, the compression springs 36 may still be compressed as a result of preloading as described with reference to Figures 5 and 7.

In Figure 11, the pop-up spoiler 32 is retracting from the fully extended position but the panel 34 is still clear of the stop 35. As such, the compression spring 36 remains biased to urge the panel 34 towards the moveable device, as in Figure 10. The spoiler 32 is still partially in the airflow over the wing 13 in Figure 11.

In Figure 12, the pop-up spoiler 32 is retracting and the panel 34 is just contacting the stop 35. The compression spring 36 is starting to elastically deform as the actuation mechanism 31 applies the force to the spoiler 32 to move the spoiler 32 into the wing 13 and away from the outer aerodynamic surface of the upper wing cover 21. As described previously with reference to Figure 9, this force is applied to the panel 34 via the move the spoiler 32 and is reacted by the stop 35. The panel 34 is starting to displace away from the pop-up spoiler 32 compared to Figure 11. In this position at the point of contact between the panel 34 and the stop 35, the spoiler 32 is fully within the aerofoil profile of the wing 13 and not exposed to the oncoming airflow over the wing 13.

Finally, Figure 13 shows the same fully retracted configuration of the pop-up spoiler 32, the same as Figure 9. The cycle of extension and retraction is complete and repeatable.

As can be seen from Figure 3, the pop-up spoiler assembly 30, in particular the actuation mechanism 31, may occupy substantially a full depth of the wing structure between upper and lower covers 21, 22 thereof. The spoiler 32 is substantially rigid to ensure that it does not significantly deflect under the high aerodynamic loads when in the extended position, even for a large transonic aircraft if deployed at cruise speeds, e.g. around Mach 0.8. The pop-up spoiler assembly 30 may be mounted to an internal wing structure between the upper and lower covers 21, 22.

Whilst in the above-described embodiments a pop-up spoiler 32 is described, it will be appreciated that the present disclosure may be applied to moveable devices configured in a variety of different ways. By way of non-limiting example, the aircraft assembly may be an aircraft fuselage and the cover may be a cover (skin) of the aircraft fuselage, and the moveable device may be a landing gear bay door or a vent door. These and other variations will be appreciated by those skilled in the art. Further, the motion of the moveable device when moving between the retracted and extended positions need not be purely translational.

Figures 14 and 15 show a portion of an example of a pop-up spoiler assembly 30. It will be appreciated that the pop-up spoiler assembly 30 of Figures 14 and 15 may be the same as and may operate in the same way as the examples described previously with reference to Figures 1-13, with the exception of the compression springs 36. In the example of Figures 14 and 15, the pop-up spoiler assembly 30 comprises compression springs each formed as an elastomeric cylinder 36c. That is to say that the compression spring(s) 36 in Figures 3, 4 and 9-13 is replaced by a compression spring formed as an elastomeric cylinder 36c.

Figure 14 shows a cross-sectional schematic view of a portion of the pop-up spoiler assembly 30 in the deployed position, showing a connection between the pop-up spoiler 32 and the panel 34. Since each compression spring formed as an elastomeric cylinder 36c is configured to be loaded under compression rather than tension, there is a need to arrange the pop-up spoiler assembly 30 such that an increase in the gap between the panel 34 and the pop-up spoiler 32 (i.e. the panel 34 being displaced away from the spoiler 32, for example when the spoiler 32 is moved towards the retracted position) causes a decrease in the length of the compression spring formed as an elastomeric cylinder 36c. Figures 14 and 15 show an example of such an arrangement, with the panel 34 positioned on a first, upper side of the pop-up spoiler 32, and the compression spring formed as an elastomeric cylinder 36c positioned on a second, lower side of the pop-up spoiler 32.

In the example shown in Figures 14 and 15, each compression spring formed as an elastomeric cylinder 36c is associated with a guide 38, which constrains movement and/or displacement of the compression spring formed as an elastomeric cylinder 36c in all directions other than along the spring axis. The elastomeric cylinder 36c is a hollow tubular shape arranged concentrically with the axis of the guide 38. In an example, a single elastomeric cylinder 36c may be arranged on each guide 38. The guide 38 may extend along the spring axis. The guide 38 is fixed to the panel 34 such that the guide 38 moves with the panel 34. In the example shown, the guide 38 comprises an insert 39 connected to the panel 34 by a fastener 40. Any reference made hereinafter to the insert 39 may be applied more generally to the guide 38 as a whole. The head or similar of the fastener 40 may be substantially flush with the outer surface of the panel 34 so as not to disrupt airflow over the panel 34, in particular when the pop-up spoiler 32 is retracted.

The insert 39 comprises a body or body portion 39a about which the compression spring formed as an elastomeric cylinder 36c is arranged. That is to say that the guide 38 may extend through the compression spring formed as an elastomeric cylinder 36c. The insert 39 further comprises a flange or flange portion 39b extending from the body portion 39a at a first end thereof. The fastener 40 connects the insert 39 to the panel 34 such that a second end of the body portion 39a is clamped against the underside of the panel 34, and the flange 39b at the first end of the insert 39 is spaced apart from the panel 34 along the spring axis.

In the example shown, the insert extends through a hole in the pop-up spoiler 32. It will therefore be appreciated that the insert 39 moves with the panel 34 and is therefore moveable by sliding relative to the pop-up spoiler 32. As such, the guide 38 extends through a hole in the pop-up spoiler 32, and is slidably arranged to move through the hole. In this way, the panel is disposed on a first side of the hole, and the compression spring is disposed on a second side of the hole opposite the first side.

The corresponding compression spring formed as an elastomeric cylinder 36c extends between the pop-up spoiler 32 and the flange 39b. That is to say that the compression spring formed as an elastomeric cylinder 36c is clamped between the underside of the pop-up spoiler 32 and the flange 39b of the insert 39. The compression spring formed as an elastomeric cylinder 36c has a first end and a second end. The first end of the compression spring formed as an elastomeric cylinder 36c is constrained in a direction along the spring axis by the spoiler, in particular an underside of a portion of the spoiler. The second end is constrained in a direction along the spring axis by the guide 38, in particular the flange 39b. This arrangement may allow the compression spring formed as an elastomeric cylinder 36c to be preloaded during assembly of the pop-up spoiler assembly 30. By way of example, the compression spring formed as an elastomeric cylinder 36c may be assembled onto the body 39a of the insert 39 prior to its assembly with the pop-up spoiler assembly 30. The panel 34, pop-up spoiler 32 and insert 39 may then be aligned and the fastener 40 used to connect the insert 39 to the panel 34. As described previously, the fastener 40 may be tightened until the second end of the body 39a of the insert 39 contacts the underside of the panel 34.

The natural length of the compression spring formed as an elastomeric cylinder 36c may be chosen such that the act of clamping the insert 39 against the panel 34 preloads the compression spring formed as an elastomeric cylinder 36c in compression. That is to say that the natural length of the compression spring formed as an elastomeric cylinder 36c may be less than the length L1 measured between the underside of the pop-up spoiler 32 and the upper side of the flange 39b as labelled in Figure 14. It will be appreciated that the terms "upper" and "lower" are relative and here defined according to the orientation of the assembly shown in Figure 14. In some cases, the preload of the compression spring formed as an elastomeric cylinder 36c in compression may be the only method by which the compression spring formed as an elastomeric cylinder 36c is connected to the pop-up spoiler 32 and the insert 39. That is to say that, in some cases, ends of the compression spring formed as an elastomeric cylinder 36c are not fixed to the pop-up spoiler 32 or the insert 39. Once loaded in compression, the compression spring formed as an elastomeric cylinder 36c will exert a force upon the flange 39b and the pop-up spoiler 32. This force acts to extend the compression spring formed as an elastomeric cylinder 36c thus biasing the panel 34 towards the pop-up spoiler 32. Subsequent movement of the panel 34 away from the pop-up spoiler 32 as described previously with reference to retraction of the pop-up spoiler 32 and shown in Figure 15 will cause further compressive elastic deformation of the compression spring formed as an elastomeric cylinder 36c, as shown by the compressed length L2 of the spring in Figure 15. This may in turn increase the magnitude of the force acting to bias the panel 34 towards the pop-up spoiler 32.

By way of-non-limiting example, the compression spring formed as an elastomeric cylinder 36c may comprise an elastomeric cylinder having a constant cross section and thickness along its axial length. It will be appreciated that as the compression spring formed as an elastomeric cylinder 36c is compressed as shown in Figure 15 the walls of the compression spring formed as an elastomeric cylinder 36c may elastically deform. This may cause the compression spring formed as an elastomeric cylinder 36c to bend, buckle or flex as shown in Figure 15. The compression spring formed as an elastomeric cylinder 36c may bulge or expand in the radial direction when deformed. As such, it may be preferable to provide a radial clearance or space or gap between the compression spring formed as an elastomeric cylinder 36c and the body portion 39a of the insert 39 when the compression spring formed as an elastomeric cylinder 36c is assembled. This may for example be achieved by providing a generally annular compression spring formed as an elastomeric cylinder 36c having an internal diameter greater than an external diameter of the body portion 39a.

The compression spring formed as an elastomeric cylinder 36c may be manufactured from any suitable elastomeric material for aerospace applications. The material stiffness and/or diameter and/or wall thickness of the hollow cylinder forming the elastomeric cylinder 38c may selected to provide the desired spring force of the compression spring.

A single compression spring formed as an elastomeric cylinder 36c may be provided in place of the plurality of disc springs 36a as described previously with reference to Figure 5. This may improve the ease of assembly of the pop-up spoiler assembly 30. The pop-up spoiler assembly 30 may be provided with a plurality of compression spring formed as an elastomeric cylinder 36c for biasing the panel 34 towards the pop-up spoiler 32.

Where the word 'or' appears this is to be construed to mean 'and/or' such that items referred to are not necessarily mutually exclusive and may be used in any appropriate combination.

Although the invention has been described above with reference to one or more preferred embodiments, it will be appreciated that various changes or modifications may be made without departing from the scope of the invention as defined in the appended claims.

## Claims

1. An aircraft assembly comprising:
a cover of an aerofoil structure with an outer aerodynamic surface and an aperture with a stop adjacent an edge of the aperture; and
a pop-up spoiler assembly comprising:
a pop-up spoiler for extending through the aperture in the cover to spoil an airflow over the aerofoil structure;
a panel attached to the pop-up spoiler; and
a plurality of compression springs for biasing the panel towards the pop-up spoiler, each compression spring having a spring axis and configured so that the compression spring shortens as a compressive load is applied to the compression spring in the direction of the spring axis,
wherein the aircraft assembly is configured so that when the pop-up spoiler is moved towards a retracted position inside the aerofoil structure the panel bears against the stop so that a face of the panel forms a substantially flush surface with the outer aerodynamic surface of the cover surrounding the aperture, and the panel is displaced from the pop-up spoiler by compressive elastic deformation of at least some of the compression springs.

2. An aircraft assembly according to claim 1, wherein each compression spring is associated with a guide for constraining displacement of the compression spring other than along the spring axis.

3. An aircraft assembly according to claim 2, wherein the guide is fixed to the panel; and/or
wherein the guide extends through the compression spring.

4. An aircraft assembly according to claim 2 or claim 3, wherein the guide extends through a hole in the pop-up spoiler, and the guide is slidably arranged to move through the hole, preferably
wherein the panel is disposed on a first side of the hole, and the compression spring is disposed on a second side of the hole opposite the first side.

5. An aircraft assembly according to any of claims 2 to 4, wherein the compression spring has a first end and a second end, and wherein the first end is constrained in a direction along the spring axis by the spoiler and the second end is constrained in a direction along the spring axis by the guide.

6. An aircraft assembly according to any of claims 2 to 5, wherein the guide comprises an insert connected to the panel by a fastener.

7. An aircraft assembly according to any of claims 2 to 6, wherein the guide has a flange spaced apart from the panel, wherein the corresponding compression spring extends between the pop-up spoiler and the flange, and wherein the guide moves with the panel and extends through a hole in the pop-up spoiler.

8. An aircraft assembly according to any preceding claim, wherein at least one of the compression springs comprises a plurality of disc springs stacked along the spring axis; and/or
wherein at least one of the compression springs comprises a coil spring.

9. An aircraft assembly according to any preceding claim, wherein the compression springs are preloaded such that the compression springs bias the panel towards the pop-up spoiler when the pop-up spoiler is in an extended position.

10. An aircraft assembly according to any preceding claim, further comprising an actuation mechanism for moving the pop-up spoiler with respect to the cover.

11. An aircraft assembly according to any preceding claim, wherein the aerofoil structure is an aircraft wing and the cover is a cover of the aircraft wing, preferably
wherein the cover is an upper wing cover; and/or
wherein the pop-up spoiler is moved by an actuation mechanism within the aircraft wing that occupies substantially a full depth of the wing between upper and lower covers thereof.

12. An aircraft assembly comprising:
a cover of an aircraft structure with an outer aerodynamic surface and an aperture with a stop adjacent an edge of the aperture;
a moveable device for extending through the aperture in the cover, wherein the moveable device carries a panel attached to the moveable device; and
a plurality of compression springs for biasing the panel towards the moveable device, each compression spring comprising a plurality of disc springs stacked along a spring axis and configured so that the compression spring shortens as a compressive load is applied to the compression spring in the direction of the spring axis, and
wherein the assembly is configured so that when the moveable device is moved towards a retracted position the panel bears against the stop so that a face of the panel forms a substantially flush surface with the outer aerodynamic surface of the cover surrounding the aperture, and the panel is displaced from the moveable device by compressive elastic deformation of at least some of the compression springs.

13. An aircraft assembly according to claim 12, wherein each compression spring is associated with a guide for constraining displacement of the compression spring other than along the spring axis, preferably
wherein the guide has a flange spaced apart from the panel, wherein the corresponding compression spring extends between the moveable device and the flange, and wherein the guide moves with the panel and extends through a hole in the moveable device.

14. An aircraft assembly according to claim 12 or claim 13, wherein each disc spring has a radial inner edge and a radial outer edge, and wherein the radial inner edge of one of the disc springs at a first end of the stack is in contact with the body of the moveable device, and the radial inner edge of another of the disc springs at a second end of the stack is in contact with the flange of the insert; and/or
wherein the compression springs are preloaded such that the compression springs bias the panel towards the moveable device when the moveable device is in an extended position; and/or
further comprising an actuation mechanism for moving the moveable device with respect to the cover; and/or
wherein the cover is a cover of the aircraft fuselage or an aircraft wing cover, and the moveable device is an aircraft spoiler, a landing gear bay door or a vent door.

15. An aircraft assembly according to any preceding claim, wherein the panel is elongate having a longitudinal direction and the plurality of compression springs are spaced apart in the longitudinal direction.

16. An aircraft assembly according to any preceding claim, wherein the stop is a rebate around at least a portion of the edge of the aperture, and/or wherein the aperture is an elongate slot.

17. An aircraft assembly comprising:
a cover of an aerofoil structure with an outer aerodynamic surface and an aperture with a stop adjacent an edge of the aperture; and
a pop-up spoiler assembly comprising:
a pop-up spoiler for extending through the aperture in the cover to spoil an airflow over the aerofoil structure;
a panel attached to the pop-up spoiler; and
a plurality of compression springs for biasing the panel towards the pop-up spoiler, wherein each compression spring includes an elastomeric cylinder, each compression spring having a spring axis and configured so that the compression spring shortens as a compressive load is applied to the compression spring in the direction of the spring axis,
wherein the aircraft assembly is configured so that when the pop-up spoiler is moved towards a retracted position inside the aerofoil structure the panel bears against the stop so that a face of the panel forms a substantially flush surface with the outer aerodynamic surface of the cover surrounding the aperture, and the panel is displaced from the pop-up spoiler by compressive elastic deformation of at least some of the compression springs.
